# EUROPEAN PATENT APPLICATION

(11) **EP 4 194 254 A1**
(43) Date of publication of application: **14.06.2023**
(21) Application number: 21214091.7
(22) Date of filing: 13.12.2021
(51) Int. Cl.: B60L 53/16, H01R 13/627

(54) **MATING INTERFACE FOR AN EV CHARGING CONNECTOR AND EV CHARGING CONNECTOR**

(71) Applicant: ABB E-mobility B.V., 2629 JG Delft (NL)
(72) Inventor: VAN-DER-VEER, Clemens, 1507 EG Zaandam (NL); UGUR, Ali, 2545 XP Den Haag (NL); GARCIA-FERRE, Francisco, 5400 Baden (CH); BECH, Lars Peter, 3119 JA Schiedam (NL)
(74) Representative: Maiwald GmbH

(57) **Abstract**

The invention relates to a mating interface (102) of an EV charging connector (100) comprising a latching arrangement. The latching arrangement comprises a recess (104, 105, 106) configured to receive a latch pin of a car inlet; wherein the recess comprises a chamfer (110).

## Description

### Technical Field

The invention relates to a mating interface of an EV charging connector, an EV charging connector comprising such a mating interface, and a use of an EV charging connector for establishing a secure connection with a car inlet.

### Background

For the mechanical connection of an EV charging connector to a vehicle power socket, EV charging connectors have a latch mechanism, which ensures that the connector has a firm hold during the charging session of the car and that the electrical connection is not interrupted. Such latch devices may be specified by a standard such as the IEC 62196-3 standard. These specifications also include, in particular, dimensions including tolerances. A latch mechanism consists, for example, of recesses in the connector housing into which pins of the car inlets engage. Due to special features such as the weight of the connector, which is increased, for example, due to the weight of the cable harness, or due to the permitted tolerances, it is possible that the connector is pulled downwards, or pushed sideways due to stress from the cable in occasions where the car inlet is located too far from the charger resulting in a tilt of the connector. Due to this, it is possible that the pins do not hit the recesses, or the latch mechanism is not properly triggered or executed, and thus the electrical charging does not occur or is interrupted. In addition, if a pin hits the housing instead of sliding into the recess, the actuator in the car inlet or the housing might be damaged. Further, if the latches are not engaged, when the mating interface is engaged with the car inlet in a skewed or canted manner, contact points are created that stress and damage the material. Moreover, a charge session may not start correctly, or in the worst case, in case of additional "handshake protocol" errors between the charger and the vehicle, the charging session may still start, and a user may pull out the connector while it is charging, resulting in arcing.

### Summary of the invention

Therefore, an object of the invention could be to provide an EV charging connector with an improved latching arrangement.

The problem is solved by the subject-matter of the independent claims. Embodiments are provided by the dependent claims, the following description and the accompanying figures.

The described embodiments similarly pertain to the mating interface, the EV (Electric Vehicle), the EV charging connector comprising such a mating interface, and the use of an EV charging connector for establishing a secure connection with a car inlet. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a mating interface of an EV charging connector comprising a latching arrangement is provided. The latching arrangement comprises a recess configured to receive a latch pin of a car inlet wherein the recess comprises a chamfer.

The latch arrangement comprises a recess in the mating interface that cooperates with a pin of the vehicle socket or "car inlet", respectively. More particular, the recess is in the enclosure of the mating interface. Under the term "recess" also a hole or cut-out is understood. When connected to a car inlet, the recess receives a pin of the car inlet, such that the connector is locked with the car inlet. The edges of the recess are usually rounded. In the proposed design, instead of such a rounding or other shape of an edge, the edge is designed with a chamfer. The chamfer extends completely over one edge, e.g. the front edge. Compared to a rounding, the chamfer starts at the edge with a defined angle significantly less than 90°, whereas the starting angle of a rounding is 90°, where 90° means in the plane of the surface, i.e., without elevation. The chamfer has the effect that a pin that is for example actuated by the car inlet hits on the chamfer and is guided into the recess, or it may move the connector slightly such that the positions of the pin and recess match and the pin is gliding into the recess. Therefore, by the chamfer a self-adjusting system is obtained.

According to an embodiment, the recess is rectangular with a first edge being parallel to a front side of the connector, wherein the chamfer is located at a side with the first edge.

The four edges of the recess may be designed in one or more different ways. For example, only one edge has a chamfer, and the other edges are rounded. Preferably, the edge at the front side, that is, the edge parallel to a front edge of the mating interface is beveled. Supposing that the connecter is slightly extracted from the car inlet, for example due to its weight, the latch pin of the car inlet would hit the front edge of the recess. Therefore, if this edge is beveled, the chamfer supports the pin to slip into the recess.

The edge being parallel to a front side of the connector is also referred to as "front edge" in this disclosure.

According to an embodiment, the rectangular recess has a chamfer on at least one other side.

The chamfer is not restricted to be located only at one side. It can be located at any side of the recess, and there may be one or more chamfers for one recess.

According to an embodiment, the recess is round and has a circumferential chamfer.

The recess may have any shape. The decisive characteristic of the chamfer is that it has an angle significantly lower than 90° already at the edge of the recess such that it can capture the pin that shall be received by the recess.

According to an embodiment, the connector comprises a plurality of latch arrangements with recesses comprising a chamfer.

There may be several latches to ensure the hold of the connector when the connector is inserted into the car inlet. One, several or all of these latches may comprise such recesses with one or more beveled edges, i.e. chamfers.

According to an embodiment, the latch arrangement is located at either the top side, the left side, the right side or the bottom side of the mating interface, or a combination thereof.

The mating interface may be designed such that it has roughly spoken a rounded rectangular shape, such that there are top, left, right and bottom sides. That is, the latch arrangement(s) with the beveled recesses may be located at any side or any sides.

According to an embodiment, the chamfer width and angle are 1.5 mm +/- 0.5 mm x 45°.

The expression "1.5 mm +/- 0.5 mm x 45° means, that the width is 1.5 mm with a tolerance of 0.5 mm, and has an angle with respect to the normal vector of the surface of the housing in the area around the recess of 45°. These dimensions are inspired by the radius of the rounding specified in the IEC 62196-3 standard. However, all dimensions, i.e. the width, the tolerance and the angle may be varied. For example, the tolerance may be narrower, for instance. +/- 0.1 mm or broader, for instance +/- 1 mm. The width is defined as the width when the chamfer is projected to the plane of the recess at the surface of the enclosure. The angle is defined in a plane perpendicular to the surface and perpendicular to the edge, as the angle with respect to the normal of the surface. The chamfer is oriented such that it extends from the edge in direction to the opposite side of the recess.

According to an embodiment, the chamfer dimensions are 1.5 mm +/- 1.5 mm x 45° +/- 1°.

This is a further example of the dimension. However, other dimensions and tolerances are possible. For example, the angle may be 30°, 40°; 50° or 60° or anything in-between or any other value between about 20° and 70°, and its tolerances may be, for example +/- 10° or any other value.

According to an embodiment, each recess is configured individually.

If there are more than one recesses with chamfer, the dimensions of the chamfers may differ. Further, if there are more than one chamfers at one recess, the dimensions of these chamfers of one recess may differ with respect to each other. In other words, the chamfers may be configured individually. Such a configuration optimizes the capturing of the pins. For example, on the top side, where the expected deviation of the pin with respect to the center of the recess may be greatest, the width of the chamfer may be larger, and the angle may be 45°. On the bottom side, the where the expected deviation of the pin with respect to the center of the recess may is lowest, the width of the chamfer may be smaller but steeper.

According to an embodiment, the chamfer is partially rounded.

The chamfer is preferably plane; however, it may also have in parts a rounding. Such a rounding may exist at the side inside the recess and may support the slipping of the latching pin of the car inlet.

According to an aspect, an EV charging connector comprising a mating interface as described herein is provided.

The connector provides the charging current for the battery of the car, or in general, to an electric driven vehicle. The mating interface is arranged - according to the definition in this disclosure - at the front part of the connector and covers the contacts of thee connector.

According to a further aspect, a usage of such an EV charging connector for establishing a secure connection with a car inlet is provided.

These and other features, aspects and advantages of the present invention will become better understood with reference to the accompanying figures and the following description.

### Short Description of the Figures

Fig. 1 shows a diagram of an EV charging connector with a mating interface according to the invention.
Fig. 2 shows a diagram of a recess for a latching mechanism.

### Detailed Description of Embodiments

Corresponding parts are provided with the same reference symbols in all figures.

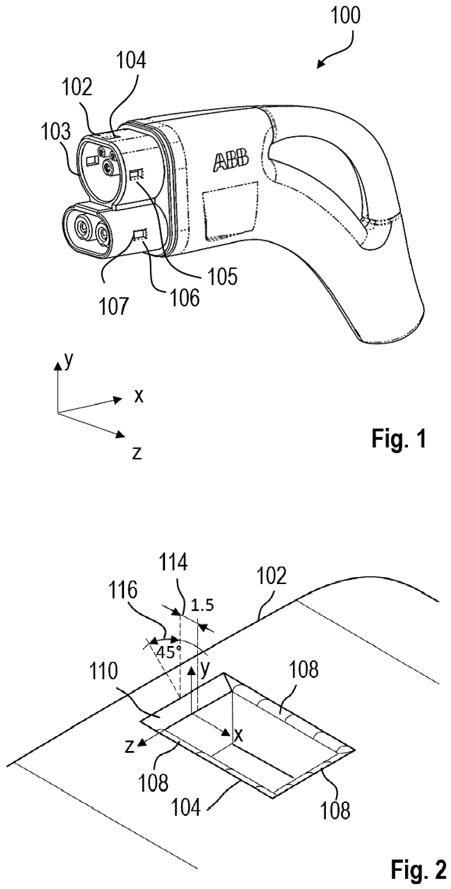

Fig. 1 shows a diagram of an EV charging connector that comprises a mating interface 102 with recesses 104, 105, 106. There are further recesses on the respective opposite sides so that in sum there are six recesses. As drawn in Fig. 1, the "front side" of the mating interface is to the left, that is, in direction to the car inlet. A front edge of the mating interface is defined to be parallel to the y-z-plane as shown in Fig. 1. Reference sign 107 labels an edge parallel to the front edge 103 of the mating interface 102 for recess 106. One or more recesses 104, 105, 106 may comprise a chamfer as shown in more detail in Fig. 2. The recesses are part of a latching mechanism. A further part is on vehicle socket side, which is a pin that is actuated when the connector 102 is plugged into a car inlet. Ideally, after inserting the connector 100 into the car inlet, the locations of the recesses 104, 105, 106 match to the location of the pin such that the pin exactly enters the recesses. However, this is not always the case. For example, the connector may be too heavy such that it is dragged downwards or to the left or right sides such that the connector is canted slightly. There are other reasons why the recesses may not fit exactly to the recesses. The recess that is most affected may be the top recess of the connector because of an unwanted emerging rotation axis on the bottom side, where the connector sits up on the car inlet.

Fig. 2 shows a diagram that illustrates such a recess according to an embodiment in more detail. Exemplarily one recess 104 is shown, which is located at the top side of the EV charging connector 100. The recess 104 in this example has on one side a chamfer 110 and three sides with a rounding 108. However, other configurations are possible. The orientation of x, y, z in the coordinate system given in Fig. 2 corresponds to that of Fig. 1. Furthermore,

Fig. 2 shows the definition of the angle 116 and the width 114 of the chamfer as specified herein. The given width of 1.5 mm may have a tolerance of, for example 0.1 mm or 0.5 mmm. The width and the tolerance as well as the angle may be varied. A greater width would increase the length in x-direction of recess at the surface but the inner dimensions of the recess would remain the same.

The chamfer 110 guides the pin of the car inlet into the recess. If, for example, there is a rotation at the bottom side of the connector 100 around an axis parallel to the z-axis, an actuated pin of the vehicle socket might hit the surface of the mating interface 102, which would lead to consequences as described at the beginning. This is avoided by the chamfer 110. The pin is captured by the chamfer 110 and guided into the recess 104. The chamfer 110 may be dimensioned according to the expected deviation between the recess and the pin. This applies to all recesses such that different dimensions for each of the recesses might be applied.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### Reference Numerals

- 100: EV charging connector
- 102: mating interface
- 103: front edge of the mating interface
- 104: recess on the top side of the connector
- 105: further recess on the left side of the connector
- 106: recess on the left side of the connector
- 107: front edge of the recess
- 108: rounding of an edge of the recess
- 110: chamfer
- 114: width of the chamfer
- 116: angle of the chamfer

## Claims

1. Mating interface (102) of an EV charging connector (100) comprising a latching arrangement, the latching arrangement comprising a recess (104, 105, 106) configured to receive a latch pin of a car inlet; wherein
the recess comprises a chamfer (110).

2. Mating interface (102) according to claim 1, wherein the recess (104, 105, 106) is rectangular with a first edge (107) being parallel to a front side of the connector (100), wherein the chamfer (110) is located at a side with the first edge (107).

3. Mating interface (102) according to claim 3, wherein the rectangular recess (104, 105, 106) has a chamfer (110) on at least one other side.

4. Mating interface (102) according to claim 1, wherein the recess (104, 105, 106) is round and has a circumferential chamfer (110).

5. Mating interface (102) according to any one of the previous claims, wherein the connector (100) comprises a plurality of latch arrangements with recesses (104, 105, 106) comprising a chamfer (110).

6. Mating interface (102) according to any one of the previous claims, wherein the latch arrangement is located at either the top side, the left side, the right side or the bottom side of the mating interface (102), or a combination thereof.

7. Mating interface (102) according to any one of the previous claims, wherein the chamfer (110) width and angle are 1.5 mm +/- 0.5 mm tolerance x 45.

8. Mating interface (102) according to any one of claims 1 to 6, wherein the chamfer (110) dimensions are 1.5 mm +/- 1.5 mm x 45° +/-1°.

9. Mating interface (102) according to any one of the previous claims, wherein each recess (104, 105, 106) is configured individually.

10. Mating interface (102) according to any one of the previous claims, wherein the chamfer is partially rounded.

11. EV charging connector (100) comprising a mating interface (102) according to any one of the previous claims.

12. Use of an EV charging connector (100) according to claim 11 for establishing a secure connection with a car inlet.
